# EUROPÄISCHE PATENTSCHRIFT

(11) **EP 2 734 414 B1**
(45) Veröffentlichungstag und Bekanntmachung des Hinweises auf die Patenterteilung: **14.09.2016**
(21) Anmeldenummer: 12737771.1
(22) Anmeldetag: 13.07.2012
(51) Int. Cl.: B60P 7/08

(54) **LADESCHIENE SOWIE GLEITSTEIN FÜR EINE LADESCHIENE**
LOADING RAIL AND SLIDING BLOCK FOR A LOADING RAIL
RAIL DE CHARGEMENT ET COULISSEAU POUR UN RAIL DE CHARGEMENT

(30) Priorität: 18.07.2011 DE 102011079334
(43) Veröffentlichungstag der Anmeldung: 28.05.2014
(73) Patentinhaber: Ford Global Technologies, LLC, Dearborn, MI 48126 (US)
(72) Erfinder: BALDSIEFEN, Lothar, 50769 Köln (DE); HUTH, René A., 53797 Lohmar (DE); VALTER, Dino, 52355 Düren (DE)
(74) Vertreter: Dörfler, Thomas
(86) Internationale Anmeldenummer: PCT/EP2012/063820
(87) Internationale Veröffentlichungsnummer: WO 2013/010948

(56) Entgegenhaltungen:
- DE-A1-102005 035 319
- FR-A1- 2 675 442
- US-B1- 6 585 465
- US-B2- 7 874 774

## Beschreibung

Die Erfindung betrifft eine Ladeschiene, insbesondere zum Einsatz in Fahrzeugen, sowie einen Gleitstein zur Verwendung mit einer derartigen Ladeschiene.

Bei der Beladung von Fahrzeugen ist häufig die Aufgabe gestellt, Gegenstände sicher zu befestigen, so dass diese während der Fahrt am Fahrzeug fixiert sind. Hierfür ist es beispielsweise bekannt, durch feststehende Ösen Zurrgurte zu ziehen, mit denen Gegenstände der Ladung innerhalb des Laderaums eines Fahrzeugs fixiert werden. Feststehende Ösen sind jedoch nicht für alle vorkommenden Ladungen und Situationen geeignet. Eine flexiblere Handhabung kann deshalb durch an Ladeschienen verschiebbare Befestigungselemente ermöglicht werden, die in eine Vielzahl von Positionen gebracht werden können und an denen beispielsweise Ösen für Zurrgurte angeordnet sind. Ferner besteht häufig die Notwendigkeit, Bestandteile von Werkstattausrüstungen, wie etwa Behälter für Kleinteile, sicher in einem Fahrzeug zu befestigen. Erhöhte Anforderungen hinsichtlich der Handhabung und der Sicherheit sind insbesondere an Befestigungssysteme für Sitze und andere Gegenstände von Fahrzeugeinrichtungen gestellt, die beispielsweise auch im Crashfall über ein ausreichendes Rückhaltevermögen verfügen müssen. Im Hinblick auf eine Verringerung der Herstellkosten wäre es wünschenswert, ein einheitliches Befestigungssystem zu schaffen, das die Anforderungen an Handhabbarkeit und Sicherheit für alle genannten Anwendungen erfüllt und dabei ein Höchstmaß an Flexibilität bzw. Anpassbarkeit an unterschiedliche zu fixierende Gegenstände und Fixierungsorte bietet.

Aus der US 3 877 671 ist eine Verzurrvorrichtung bekannt, die aus miteinander verbindbaren Elementen besteht, die jeweils einen Verzurrungskanal aufweisen, in dem Gleitsteine geführt sind, die einen Ring zur Befestigung von Zurrgurten tragen. Der Kanal weist zur Führung der Gleitsteine in den Kanal vorstehende Lippen sowie seitliche Vorsprünge auf. Hierdurch ist keine für die Befestigung von Sitzen ausreichende Sicherheit der Fixierung erreichbar. Ferner kann ein Verklemmen der Gleitsteine beim Verschieben nicht immer sicher vermieden werden.

In der US 7 874 774 B2 ist ein Ladesystem für Fahrzeuge offenbart, worin in einer Längsnut einer Ladeschiene ein Gleitstein geführt ist, der eine Halterung etwa für einen Zurrgurt trägt. Der Gleitstein weist zwei parallele Nuten auf, in die entsprechende Vorsprünge der Ladeschiene greifen und ein für die Entnahme des Gleitsteins aus der Führungsschiene notwendiges Verdrehen verhindern. Eine Klemmung der Gleitsteine erfolgt ebenfalls über die Vorsprünge und die Nuten des Gleitsteins. Aus der US 7 070 374 B2 ist eine Befestigungsanordnung bekannt, bei der ein Halter in einem Schlitz einer Schiene geklemmt bzw. zum Verschieben gelöst werden kann, wobei der Halter mit der Schiene zusammenwirkende Auskehlungsbereiche und gezahnte Kanten aufweist. Auch hierdurch ist keine für alle genannten Anwendungen ausreichend sichere Fixierung gewährleistet.

Die US 6 585 465 B1 offenbart ein Ladungshaltesystem für Fahrzeuge, das Verzurrösen aufweist, die an Schienen eingerastet und verriegelt werden können, die an der Fahrzeugstruktur befestigt sind. Die Schienen sind dünnwandig hohl ausgebildet, wobei eine Vorderwand einwärts gebogene Abschnitte aufweist, die einen längserstreckten Kanal bilden und die zusätzlich einwärts gebogen sind, um rechtwinklig zu den Seiten des Kanals stehende, in einer gemeinsamen Ebene liegende Randabschnitte zu bilden. Die Verzurrösen haben einen Rastmechanismus mit einer Klaue, die durch den Kanal eingesetzt werden kann und die in Rastnuten der Randabschnitte einrastet.

Eine Aufgabe der vorliegenden Erfindung besteht darin, eine Ladeschiene sowie einen Gleitstein für eine derartige Ladeschiene vorzuschlagen, durch die bzw. durch den die genannten Nachteile vermieden werden. Insbesondere soll dadurch bei einer einfachen Handhabung eine möglichst flexible, aber dabei den jeweiligen Sicherheitsanforderungen genügende Fixierung sowohl von Lasten, als auch von Einrichtungsgegenständen oder Sitzen in einem Fahrzeug ermöglicht werden.

Diese Aufgabe wird durch eine Ladeschiene bzw. durch einen Gleitstein wie in den unabhängigen Ansprüchen angegeben gelöst.

Eine erfindungsgemäße Ladeschiene weist ein Querschnittsprofil auf, das zumindest über einen Teil der Länge der Ladeschiene gleichförmig ist. Die Ladeschiene weist an ihrer Oberseite eine Längsnut auf, die sich zumindest über einen Teil der Länge der Ladeschiene erstreckt. Die Längsnut ist zur Aufnahme mindestens eines Gleitsteins ausgebildet, wobei der Gleitstein über zumindest einen Teil der Länge der Ladeschiene verschiebbar sein soll. In ihrem oberen Bereich ist die Längsnut zumindest in einem Teilbereich ihrer Länge durch mindestens einen an einer Seitenwand der Längsnut ansetzenden Steg zu einem Längsschlitz verengt. Hierdurch kann in diesem Bereich eine Entnahme des Gleitsteins quer zur Längsrichtung der Ladeschiene verhindert werden. Der Steg trägt mindestens einen nach unten ragenden Vorsprung.

Erfindungsgemäß bildet der Vorsprung auf einer vom Längsschlitz abgewandten Seite des Vorsprungs von unten gesehen, d.h. von einem unteren Bereich der Längsnut aus gesehen, einen Hinterschnitt aus. Eine erfindungsgemäße Ladeschiene weist somit nicht nur einen ersten Hinterschnitt auf, der dadurch zustande kommt, dass die Längsnut in ihrem oberen Bereich zumindest in einem Teilbereich ihrer Länge durch den mindestens einen an einer Seitenwand ansetzenden Steg zu einem Längsschlitz verengt ist; durch diesen ersten Hinterschnitt wird ein Gleitstein, der dem Innenprofil der Längsnut angepasst ist, formschlüssig in der Längsnut der Ladeschiene gegen ein Herausziehen nach oben gehalten. Die erfindungsgemäße Ladeschiene umfasst zumindest einen weiteren Hinterschnitt, der beispielsweise durch eine wulstartige Ausbildung des von dem Steg nach unten ragenden Vorsprungs oder durch eine vom Längsschlitz fort gerichtete Schrägstellung des Vorsprungs entsteht; der weitere Hinterschnitt hält den Gleitstein auch gegen ein Herausziehen nach unten im oberen Bereich der Längsnut. Die erfindungsgemäße Ladeschiene weist in diesem Sinne einen doppelten Hinterschnitt auf. Durch den doppelten Hinterschnitt verhakt sich der Gleitstein mit der Ladeschiene derart, dass auch bei einer extremen Belastung, die zu einer Verformung der Ladeschiene und/oder des Gleitsteins führt, ein Herausziehen des Gleitsteins aus der Längsnut verhindert werden kann.

Dadurch, dass der Vorsprung von unten gesehen einen Hinterschnitt ausbildet, wird bei Ausübung einer im Wesentlichen nach oben gerichteten Kraft auf den Gleitstein ein Herausziehen des Gleitsteins aus der Längsnut mit erhöhter Sicherheit verhindert. Auch ein verkipptes Herausziehen des Gleitsteins aus der Längsnut kann mit erhöhter Sicherheit verhindert werden. Es hat sich insbesondere gezeigt, dass durch die erfindungsgemäße Ausbildung einer Ladeschiene ein wesentlich verbessertes Rückhaltevermögen im Crashfall erzielt werden kann. Ferner wird ein Verklemmen des Gleitsteins durch unbeabsichtigtes Verdrehen bzw. durch Reibungskräfte beim Verschieben sicher verhindert. Hierdurch wird nicht nur eine vereinfachte, insbesondere eine leichtere Konstruktion der Ladeschiene unter Verwendung preisgünstiger Materialien ermöglicht, sondern auch die Handhabung verbessert.

Gemäß einer bevorzugten Ausführungsform der Erfindung ist der Vorsprung dem Längsschlitz benachbart angeordnet. Der Vorsprung setzt somit an der den Rand des Längsschlitzes bildenden Kante des Steges an bzw. stellt ein nach unten gekrümmtes Ende des Steges dar. Hierdurch wird eine besonders stabile Ausführung erzielt, die auch bei einer relativ dünnwandigen Ausführung der Ladeschiene eine besonders hohe Auszugskraft gewährleistet.

Gemäß einer besonders bevorzugten Ausführungsform der Erfindung ist der mindestens eine Vorsprung gegen eine Führungsfläche der Ladeschiene gerichtet. Diese Führungsfläche kann insbesondere als innenseitige Fläche einer Seitenwand der Längsnut ausgebildet sein. Diese Fläche kann senkrecht zur Oberseite der Ladeschiene oder schräg hierzu stehen und kann beispielsweise als Führungsschräge ausgebildet sein. Dadurch, dass der Vorsprung gegen eine Führungsfläche gerichtet ist, wird eine besonders sichere Führung des Gleitsteins gewährleistet, so dass ein ungewolltes Verklemmen beim Verschieben mit besonders hoher Sicherheit ausgeschlossen ist.

Erfindungsgemäß bildet die zum Längsschlitz weisende Seite des Vorsprungs eine Schräge aus, die näherungsweise parallel zu einem Teilbereich der Oberfläche des Vorsprungs auf einer vom Längsschlitz abgewandten Seite verläuft, nämlich zu einer Oberfläche im Bereich des weiteren bzw. doppelten Hinterschnitts. Hierdurch wird eine besonders einfach herstellbare und stabile Ausführungsform der Ladeschiene ermöglicht.

Weiterhin ist es bevorzugt, dass die Längsnut durch zwei einander gegenüberliegende Stege verengt ist. In vorteilhafter Weise trägt jeder der beiden Stege einen Vorsprung, wobei es besonders vorteilhaft ist, dass jeder der beiden Vorsprünge auf einer jeweils vom Längsschlitz abgewandten Seite von unten gesehen einen Hinterschnitt ausbildet. Die beiden Hinterschnitte sind somit einander entgegen gerichtet. Die Ladeschiene kann dementsprechend auch zwei Führungsflächen aufweisen. Hierdurch wird eine besonders sichere Führung des Gleitsteins und eine weiter erhöhte Auszugskraft gewährleistet.

Gemäß einer besonders bevorzugten Ausführungsform der Erfindung ist die Ladeschiene bezüglich einer Längsmittelebene der Ladeschiene spiegelsymmetrisch ausgebildet. Dies bedeutet, dass die beiden Stege und die Vorsprünge jeweils gleich, jedoch spiegelbildlich zueinander gestaltet sind, ebenso wie ggf. die Führungsflächen. Die symmetrische Ausgestaltung ermöglicht eine einfache und leichte Konstruktion sowie eine besonders sichere Handhabung.

In vorteilhafter Weise weist die Ladeschiene eine flache Unterseite auf. Die flache Unterseite kann insbesondere dafür ausgebildet sein, die Ladeschiene mit einer Unterlage, etwa einem Bodenblech, einer Seitenwand, einer Decke oder einer anderen Tragstruktur eines Fahrzeugs zu verbinden. Hierfür kann die Unterseite der Ladeschiene beispielsweise mit Bohrungen versehen sein.

Der innerhalb der Ladeschiene gebildete Hohlraum bzw. die Längsnut kann ferner einen Bereich umfassen, der für die Aufnahme des Gleitsteins nicht benötigt wird und in dem beispielsweise Schrauben- oder Nietenköpfe von Schrauben bzw. Nieten aufgenommen sein können, mit denen die Ladeschiene auf einer Unterlage befestigt ist. Hierdurch wird eine einfache Befestigung ermöglicht, ohne dass die Verschiebbarkeit des Gleitsteins beeinträchtigt wird.

Ein erfindungsgemäßer Gleitstein bzw. Nutenstein umfasst ein Mittelteil und mindestens ein Seitenteil, wobei das Mittelteil zum Zusammenwirken mit einem durch einen Längsschlitz einer Ladeschiene einsetzbaren Verbindungsmittel, etwa einer Schraube zur Verbindung mit einem Befestigungsmittel, ausgebildet ist. Erfindungsgemäß weist das mindestens eine Seitenteil an einer Oberseite des Gleitsteins, von einer Unterseite des Gleitsteins aus gesehen, einen zum Mittelteil gerichteten Hinterschnitt auf. Der Hinterschnitt ermöglicht ein Zusammenwirken mit einem entsprechenden Vorsprung einer Ladeschiene zur Verbesserung der Führung des Gleitsteins und zur Erhöhung der Auszugskraft.

Insbesondere ist ein erfindungsgemäßer Gleitstein zur längsverschiebbaren Aufnahme in der Längsnut einer erfindungsgemäßen Ladeschiene ausgebildet. Der Gleitstein weist hierfür insbesondere eine Länge auf, die deutlich geringer ist als die Länge der Ladeschiene, sowie eine Querschnittsfläche, die über die Länge des Gleitsteins gleichförmig ist. Die in Längsrichtung der Ladeschiene gemessene Länge des Gleitsteins kann größer sein als die in Querrichtung, d.h. quer zur Längsrichtung gemessene Breite des Gleitsteins; die Länge des Gleitsteins kann aber auch gleichgroß wie oder kleiner als die Breite des Gleitsteins sein. Die Querschnittsfläche des Gleitsteins ist zur Aufnahme in der Ladeschiene bevorzugt zumindest teilweise komplementär zur Querschnittsfläche der Längsnut geformt. Dabei ist das Querschnittsprofil bevorzugt über die gesamte oder nahezu die gesamte Länge des Gleitsteins gleichförmig. Der Gleitstein ist bevorzugt derart dimensioniert, dass er, wenn er in der Ladeschiene aufgenommen ist, leicht verschoben werden kann, sich jedoch nicht so weit verdrehen kann, dass Reibungskräfte zum Verklemmen führen könnten. Hierfür ist zwischen dem Gleitstein und der Innenwand der Längsnut ein geeignetes Maß an Spiel vorgesehen.

Vorzugsweise weist das Mittelteil auf seiner Oberseite zum Seitenteil hin eine Schräge auf. Hierdurch kann eine besonders stabile und hoch belastbare Ausführungsform des Gleitsteins geschaffen werden. Die Schräge kann in vorteilhafter Weise näherungsweise parallel zu einer Oberfläche des Seitenteils im Bereich des Hinterschnitts ausgebildet sein, wodurch die Führung des Gleitsteins in einer entsprechenden Ladeschiene verbessert wird.

Gemäß einer bevorzugten Ausführungsform ist der Gleitstein bezüglich einer Längsmittelebene des Gleitsteins symmetrisch ausgebildet und weist zwei Seitenteile auf, die jeweils von unten gesehen einen zum Mittelteil gerichteten Hinterschnitt ausbilden. Ist der Gleitstein in die Ladeschiene eingesetzt, so kann die Längsmittelebene des Gleitsteins mit der der Ladeschiene zusammen fallen.

In bevorzugter Weise ist der Gleitstein als Schiebemutter mit einem Gewinde zur Aufnahme einer durch den Längsschlitz einsetzbaren Schraube eines Befestigungsmittels, die als Verbindungsmittel dient, ausgebildet. Das Befestigungsmittel kann beispielsweise zur Fixierung eines Ladeguts dienen, wobei das Befestigungsmittel etwa eine Öse zum Befestigen eines Zurrgurtes aufweisen kann. Das Befestigungsmittel kann aber auch etwa einen Montagewinkel zum Befestigen einer Zwischenwand oder einer Werkstattausrüstung aufweisen oder auch beispielsweise zum Befestigen eines Sitzes ausgebildet sein.

In besonders bevorzugter Weise ist der Gleitstein klemmbar zur kraftschlüssigen Fixierung an der Ladeschiene ausgebildet. Hierfür kann der Gleitstein beispielsweise als Teil eines klemmbaren Befestigungselements ausgebildet sein, das ein Befestigungsmittel umfasst, das über eine Schraube mit dem Gleitstein verspannt werden kann. Hierfür kann die Ladeschiene Anlageflächen aufweisen, die die von komplementären Anlageflächen des Gleitsteins übertragenen Kräfte aufnehmen. Die erfindungsgemäße Ausbildung der Ladeschiene und des Gleitsteins ermöglicht dabei die Übertragung besonders hoher Kräfte, ohne dass sich die Ladeschiene in wesentlichem Maße verformt. Durch Klemmen des Gleitsteins, beispielsweise durch Festziehen der Schraube, wird somit auf einfache Weise eine besonders sichere Fixierung des Gleitsteins und des mit diesem verbundenen Befestigungselements ermöglicht. Hierdurch können auch Gegenstände, für die besonders hohe Sicherheitsanforderungen gelten, wie etwa Fahrzeugsitze, sicher mit dem Fahrzeug verbunden werden.

Gemäß einer bevorzugten Ausführungsform ist der Gleitstein derart ausgebildet, dass dann, wenn der Gleitstein in der Ladeschiene aufgenommen ist, an seiner Unterseite ein Freiraum verbleibt. Dies hat den weiteren Vorteil, dass in dem Freiraum Mittel zur Befestigung der Ladeschiene beispielsweise an einem Boden, an einer Wand oder an einer Decke eines Fahrzeugs angeordnet sein können. So können beispielsweise Schraubenköpfe von Schrauben, mit denen die Unterseite der Ladeschiene an einer Tragstruktur befestigt ist, in dem Freiraum aufgenommen sein, so dass hierdurch die freie Verschiebbarkeit des Gleitsteins nicht beeinträchtigt wird.

Eine erfindungsgemäße Ladeschiene kann in vorteilhafter Weise beispielsweise aus Stahl oder aus Aluminium hergestellt werden, etwa durch Biegen eines Bleches bzw. durch Strangpressen. Dabei können preisgünstige Legierungen mit normaler Festigkeit verwendet werden. Ein erfindungsgemäßer Gleitstein kann beispielsweise durch Ablängen eines entsprechenden Profilstabs aus Stahl oder Aluminium hergestellt werden.

Die vorliegende Erfindung ist mit Bezug auf die Fixierung von Gegenständen in Fahrzeugen beschrieben worden, ist aber nicht hierauf beschränkt.

Die Erfindung wird nachfolgend anhand der Zeichnungen beispielhaft näher erläutert. Es zeigen:
- Fig. 1: ein erstes Ausführungsbeispiel einer erfindungsgemäßen Ladeschiene mit einem darin eingesetzten Gleitstein in einer Querschnittsdarstellung;
- Fig. 2: die Ladeschiene mit darin eingesetztem Gleitstein gemäß Fig. 1 mit einem Verbindungsmittel und einem Adapter;
- Fig. 3: einen Abschnitt einer erfindungsgemäßen Ladeschiene in perspektivischer Darstellung;
- Fig. 4: einen erfindungsgemäßen Gleitstein in perspektivischer Darstellung;
- Fig. 5: eine zweite Ausführungsform einer erfindungsgemäßen Ladeschiene, die zur Befestigung an einer Fahrzeugwand angeordnet ist;
- Fig. 6a bis 6c: weitere Ausführungsbeispiele erfindungsgemäßer Ladeschienen jeweils in Querschnittsdarstellung, die in Profilelemente integriert sind;
- Fig. 7a bis 7c: Profilelemente bzw. Ladeböden mit integrierten Ladeschienen in Querschnitts- bzw. perspektivischer Darstellung und
- Fig. 8: das in Fig. 1 dargestellte Ausführungsbeispiel der Ladeschiene mit darin eingesetztem Gleitstein in vergrößerter Teildarstellung.

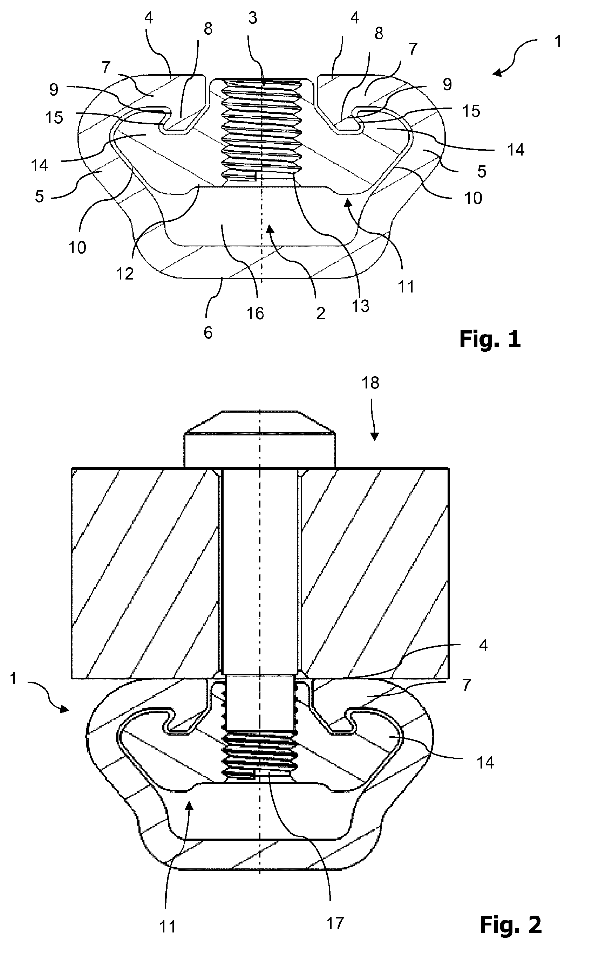

Gemäß Fig. 1 ist in Querschnittsdarstellung eine erfindungsgemäße Ladeschiene 1 gezeigt, die einen Hohlraum 2 umschließt. Der Hohlraum 2 ist als Längsnut ausgebildet, die zur Oberseite der Ladeschiene 1 in einen verengten Längsschlitz 3 mündet. Die Ladeschiene weist eine im Wesentlichen flache Oberseite 4, Seitenwände 5 und eine im Wesentlichen flache Unterseite 6 auf. Die Oberseite 4 wird durch Stege 7 gebildet, die den Längsschlitz 3 begrenzen. Insgesamt ist die Ladeschiene 1 im Querschnitt somit näherungsweise als C-Profil geformt. An den Stegen 7 setzen Flansche bzw. Vorsprünge 8 an, die jeweils von unten gesehen einen Hinterschnitt 9 ausbilden. Die Vorsprünge 8 ragen in den Hohlraum 2 von oben hinein und sind jeweils entgegen einer Führungsschräge 10 gerichtet.

Wie in Fig. 1 gezeigt, ist in die Ladeschiene ein Kulissenstein bzw. Gleitstein 11 eingesetzt. Der Gleitstein 2 ist im Querschnittsprofil im Wesentlichen komplementär zur Form des Hohlraums 2 der Ladeschiene 1 ausgebildet. Der Gleitstein 11 umfasst einen Mittelteil 12, der ein Innengewinde 13 aufweist, sowie zwei Seitenteile 14. Der Mittelteil 12 passt in den Längsschlitz 3 und ragt durch diesen nahezu bis an die Oberseite 4 der Ladeschiene hindurch. Die Seitenteile 14 weisen jeweils einen Hinterschnitt 15 auf, der in eine zwischen dem Mittelteil 12 und den Seitenteilen 14 verlaufende Nut hineinragt und mit dem Hinterschnitt 9 des Vorsprungs 8 zusammenpasst. Zwischen den Vorsprüngen 8 und den Führungsschrägen 10 werden die Seitenteile 14 und damit der Gleitstein 2 geführt, so dass ein Verklemmen des Gleitsteins 2 beim Verschieben vermieden wird.

Die Ladeschiene 1 und der Gleitstein 11 sind symmetrisch bezüglich einer Längsmittelebene aufgebaut. Die flache Unterseite 6 der Ladeschiene 1 ermöglicht eine einfache Befestigung der Ladeschiene an einer Unterlage, etwa einem Bodenblech oder einer anderen Fahrzeugstruktur. Unterhalb des Gleitsteins 11 kann ein Freiraum 16 verbleiben, in dem beispielsweise Schrauben- oder Nietenköpfe einer Befestigung der Ladeschiene an einer Fahrzeugstruktur aufgenommen sein können. Hierdurch wird eine freie Beweglichkeit des Gleitsteins gewährleistet. Die erhöhte Ausbildung der Seitenwände 5 zur Gewährleistung des Freiraums 16 kann ebenfalls günstig sein, wenn eine erhöhte Steifigkeit der Ladeschiene 1 gewünscht ist.

Wie in Fig. 2 gezeigt, kann mit einer als Verbindungsmittel dienenden Schraube 17 ein Adapter 18 mit dem Gleitstein 11 verschraubt werden. Das Außengewinde der Schraube 17 ist in Fig. 2 nicht dargestellt. Der Adapter kann Befestigungsmittel zur Befestigung beispielsweise von Zurrgurten, Einrichtungsgegenständen oder Sitzen tragen. Durch Festziehen der Schraube 17 wird der Gleitstein 11 mit dem Adapter verspannt, so dass dieser an der Ladeschiene 1 kraftschlüssig fixiert ist. Die Kraftübertragung zwischen Gleitstein 11 und Ladeschiene 1 erfolgt über einen Anlagebereich, der sich im Bereich der Seitenteile 14 des Gleitsteins 11 bzw. im oberen Bereich des Seitenwände 5 und im Übergangsbereich zu den Stegen 7 sowie ggf. an der Unterseite der Stege 7 erstreckt. Ferner erfolgt ein Reibschluss zwischen dem Adapter 18 und der Oberseite 4 der Ladeschiene. Das Zusammenwirken der Vorsprünge 8 mit der komplementären Form der Seitenteile 14 des Gleitsteins 11 ermöglicht die Ausübung einer besonders hohen Kraft, ohne dass eine wesentliche Verformung der Ladeschiene 1 auftritt. Die Ladeschiene 1 kann deshalb besonders leicht und ggf. flexibel ausgeführt sein.

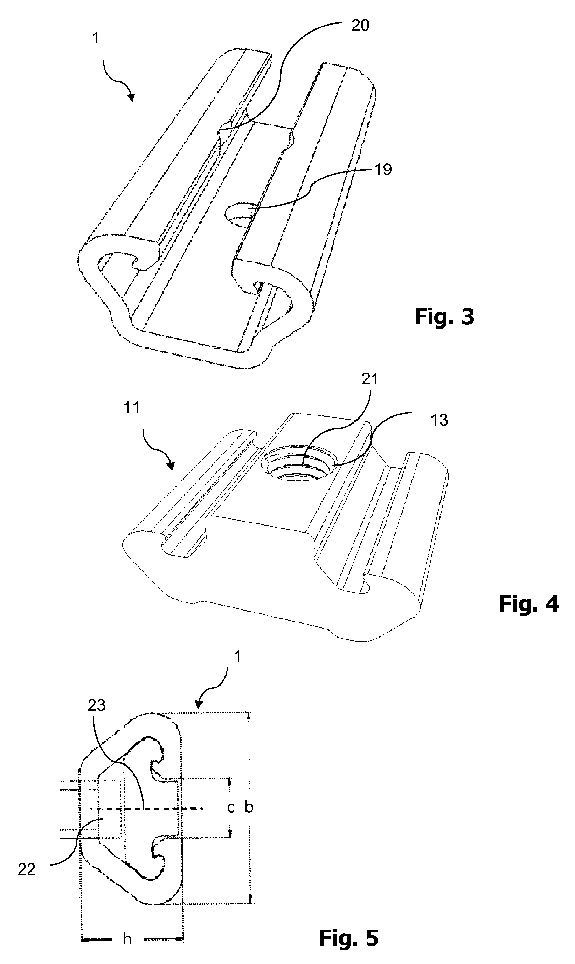

In Fig. 3 ist ein Abschnitt der Ladeschiene 1 gemäß Fig. 1 und 2 in perspektivischer Ansicht dargestellt. Die Ladeschiene 1 weist an ihrer Unterseite Bohrungen 19 zur Befestigung an einer Unterlage auf. Ferner können Ausnehmungen 20 vorgesehen sein, die eine zusätzliche formschlüssige Fixierung eines Gleitsteins 11 bzw. eines Adapters 18 ermöglichen.

Fig. 4 zeigt einen Gleitstein 11 gemäß Fig. 1 und 2 in perspektivischer Darstellung. Man erkennt, dass der Gleitstein 11, abgesehen von der zentralen Bohrung 21 mit einem Innengewinde 13, über seine Länge ein im Wesentlichen konstantes Querschnittsprofil aufweist. Der Gleitstein 11 kann eine näherungsweise gleiche Länge wie Breite haben. Da die Ladeschiene 1 in der Regel ein Vielfaches der in Fig. 3 dargestellten Länge aufweist, können in eine solche Ladeschiene mehrere Gleitsteine 11 eingesetzt sein. Während ein Auszug des Gleitsteins 1 in Querrichtung durch die erfindungsgemäße Profilgestaltung verhindert wird, kann der Gleitstein 11 vom Ende der Ladeschiene 1 in diese eingesetzt werden und in Längsrichtung verschoben werden.

Eine weitere Ausführungsform einer erfindungsgemäßen Ladeschiene ist in Fig. 5 dargestellt. Wie durch die Lage der Ladeschiene in Fig. 5 angedeutet, kann diese, wie auch die anderen beschriebenen Ausführungsformen, beispielsweise an einer Fahrzeugwand angebracht werden. Eine hierzu dienende Schraube 22 ist in Fig. 5 symbolisch dargestellt. Eine Längsmittelebene 23 der Ladeschiene 1, zu der die Ladeschiene 1 spiegelsymmetrisch ausgebildet ist, ist in Fig. 5 ebenfalls angedeutet. Die Höhe h der Ladeschiene kann beispielsweise ca. 28 mm betragen, die Breite b ca. 60 mm und die Breite c des Längsschlitzes ca. 16 mm. Die Länge der Ladeschiene kann bis zu mehreren Metern betragen.

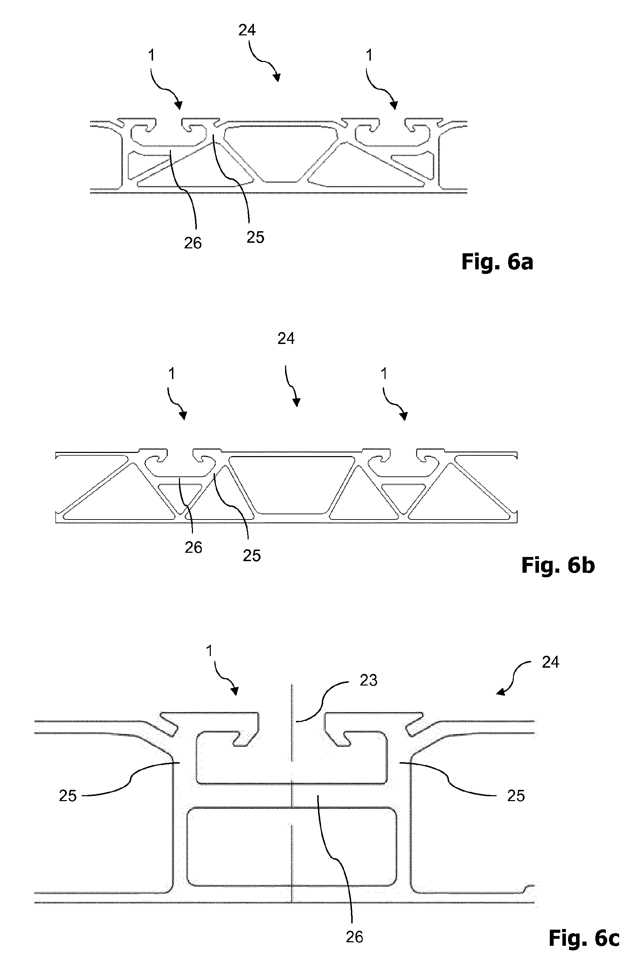

Weitere Ausführungsformen erfindungsgemäßer Ladeschienen sind in den Fig. 6a bis 6c gezeigt. Hierbei ist die Ladeschiene 1 jeweils in Profilelemente 24 integriert, die etwa Teile einer Boden-, Wand- oder Deckenplatte sein können. Wie in Fig. 6a bis 6c zu erkennen, können die Seitenwände 25 sowie die untere Wand 26 als Verstrebungen der Profilelemente 24 ausgebildet oder mit diesen verbunden sein, wobei Fig. 6a eine asymmetrische und Fig. 6b und 6c jeweils symmetrische Gestaltungen der integrierten Ladeschiene 1 zeigen. Dabei kann ein Profilelement 24 jeweils mehrere integrierte Ladeschienen 1 umfassen. Die Profilelemente 24 können beispielsweise durch Strangpressen hergestellt werden. Hierdurch kann auf einfache Weise eine sehr steife, tragfähige, sichere und vielseitig einsetzbare Befestigungsmöglichkeit beispielsweise für Ladungen, Einrichtungsgegenstände und Sitze geschaffen werden.

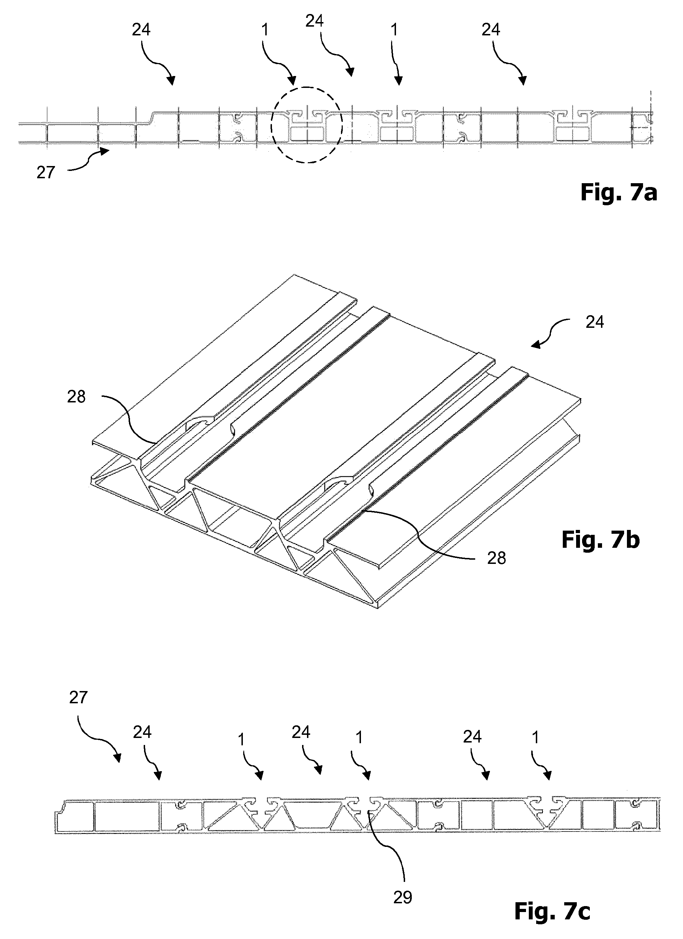

Fig. 7a bis 7c zeigen Profilelemente bzw. Ladeböden mit integrierten Ladeschienen in Querschnitts- bzw. perspektivischer Darstellung, wobei jeweils mehrere Profilelemente 24 zu einem Ladeboden 27 verbunden werden können. Dabei entspricht das Querschnittsprofil der in Fig. 7a mit dem Kreis markierten Ladeschiene dem in Fig. 6c gezeigten. Das Querschnittsprofil der Ladeschiene des in Fig. 7b dargestellten Profilelements 24 entspricht dem in Fig. 6b gezeigten, wobei in der perspektivischen Darstellung der Fig. 7b Ausnehmungen 28 erkennbar sind, durch die die entsprechenden Gleitsteine auch von oben her eingesetzt und entnommen werden können. Wie in Fig. 7b gezeigt, kann ein Profilelement 24 auch mehrere integrierte Ladeschienen umfassen. Fig. 7c zeigt Profilelemente 24 mit integrierter Ladeschiene mit einem offenen Boden 29, wodurch eine erhöhte Flexibilität des durch die Profilelemente gebildeten Ladebodens 27 erzielt wird.

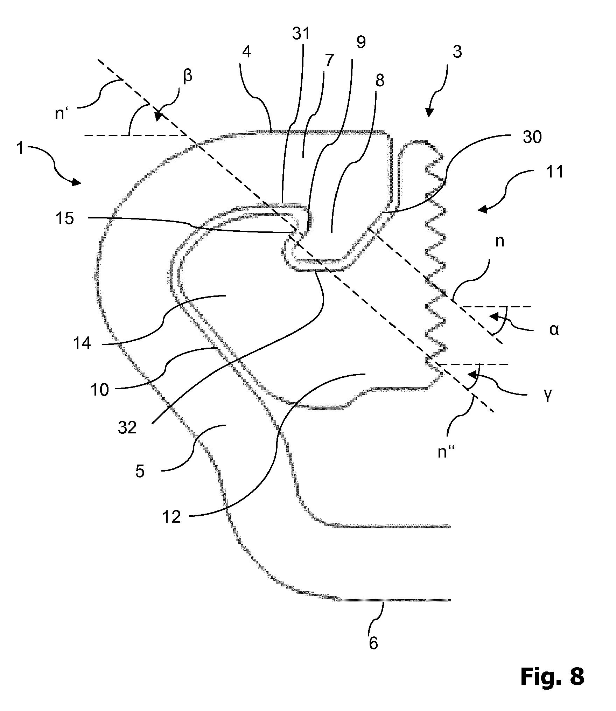

In Fig. 8 ist die in Fig. 1 dargestellte Ladeschiene 1 mit darin eingesetztem Gleitstein 11 in vergrößerter Ausschnittsdarstellung gezeigt. Die Oberseite 4 der Ladeschiene 1 ist im Wesentlich horizontal gerichtet. Die den Längsschlitz 3 begrenzende Stirnseite des Stegs 7 ist in ihrem oberen Bereich vertikal ausgebildet und geht in ihrem unteren Bereich in eine Schräge 30 über. Die Schräge 30 weist eine Oberflächennormale n auf, die mit einer horizontalen Richtung einen Winkel α bildet. Eine an die Schräge 30 anschließende Unterseite des Vorsprungs 8 ist im Wesentlichen horizontal ausgebildet. Die daran anschließende Rückseite des Vorsprungs 8 weist einen Oberflächenbereich mit einer vom Längsschlitz 3 fort weisenden Oberflächennormalen n' auf, die schräg nach oben gerichtet ist und mit einer horizontalen Richtung einen Winkel β einschließt. Insbesondere ist die Oberfläche des Stegs bzw. des Vorsprungs, ausgehend von der Oberseite 4 des Stegs 7, bis zum Bereich des Hinterschnitts um mehr als 270° gekrümmt, ausgehend von der Innenseite 31 des Stegs 7 um mehr als 90°.

Das Querschnittsprofil des Mittelteils 12 und des Seitenteils 14 des Gleitsteins 11 ist im oberen Bereich komplementär zum Innenprofil der Ladeschiene 1 ausgebildet. Das Mittelteil 12 und das Seitenteil 14 sind durch eine Nut 32 voneinander getrennt, die komplementär zum Vorsprung 8 ausgebildet ist und diesen aufnimmt. Dem Hinterschnitt 9 der Ladeschiene 1 entspricht ein Hinterschnitt 15 des Gleitsteins 11, der durch einen Überhang gebildet wird, mit dem das Seitenteil 14 über einen Boden der Nut 31 hinausragt. Im Bereich des Hinterschnitts weist das Seitenteil 14 eine Oberflächennormale n" auf, die schräg nach unten zum Mittelteil 12 gerichtet ist und mit einer horizontalen Richtung einen Winkel γ einschließt.

Die Oberflächennormalen n', n" verlaufen im Wesentlichen parallel zueinander, so dass β und γ näherungsweise gleich sind. Auch die Oberflächennormale n ist im Wesentlichen parallel zu n' und n" gerichtet, so dass auch α näherungsweise den gleichen Wert hat wie β oder γ. Die genannten Winkel können beispielsweise im Bereich von 35° - 45° liegen.

Der Übersichtlichkeit halber sind nicht in allen Figuren alle Bezugszeichen dargestellt. Im Text nicht erläuterte Bezugszeichen haben die gleiche Bedeutung wie in den übrigen Figuren.

### Bezugszeichenliste

- 1: Ladeschiene
- 2: Hohlraum
- 3: Längsschlitz
- 4: Oberseite
- 5: Seitenwand
- 6: Unterseite
- 7: Steg
- 8: Vorsprung
- 9: Hinterschnitt
- 10: Führungsschräge
- 11: Gleitstein
- 12: Mittelteil
- 13: Innengewinde
- 14: Seitenteil
- 15: Hinterschnitt
- 16: Freiraum
- 17: Schraube
- 18: Adapter
- 19: Bohrung
- 20: Ausnehmung
- 21: Bohrung
- 22: Schraube
- 23: Längsmittelebene
- 24: Profilelement
- 25: Seitenwand
- 26: Untere Wand
- 27: Ladeboden
- 28: Ausnehmung
- 29: Boden
- 30: Schräge
- 31: Innenseite
- 32: Nut

## Patentansprüche

1. Ladeschiene (1) mit einem über zumindest einen Teil ihrer Länge gleichförmigen Querschnittsprofil, die an einer Oberseite (4) eine Längsnut zur Aufnahme mindestens eines Gleitsteins (11) aufweist, wobei die Längsnut in einem oberen Bereich durch mindestens einen an einer Seitenwand (5) der Längsnut ansetzenden Steg (7) zu einem Längsschlitz (3) verengt ist und der Steg (7) mindestens einen nach unten ragenden Vorsprung (8) trägt, wobei der Vorsprung (8) auf einer vom Längsschlitz (3) abgewandten Seite von unten gesehen einen Hinterschnitt (9) ausbildet,
**dadurch gekennzeichnet, dass**
der mindestens eine Vorsprung (8) auf seiner zum Längsschlitz (3) gewandten Seite eine Schräge (30) aufweist, die näherungsweise parallel zu einer Oberfläche des Vorsprungs (8) im Bereich des Hinterschnitts (9) ausgebildet ist.

2. Ladeschiene nach Anspruch 1,
**dadurch gekennzeichnet, dass**
der mindestens eine Vorsprung (8) dem Längsschlitz (3) benachbart ist.

3. Ladeschiene nach Anspruch 1 oder 2,
**dadurch gekennzeichnet, dass**
der mindestens eine Vorsprung (8) gegen eine Führungsfläche der Ladeschiene (1) gerichtet ist.

4. Ladeschiene nach Anspruch 3,
**dadurch gekennzeichnet, dass**
die Führungsfläche als Führungsschräge (10) an der Innenseite einer Seitenwand der Ladeschiene (1) ausgebildet ist.

5. Ladeschiene nach einem der vorhergehenden Ansprüche,
**dadurch gekennzeichnet, dass**
die Längsnut durch zwei einander gegenüberliegende Stege (7) verengt ist, die jeweils einen Vorsprung (8) tragen, wobei beide Vorsprünge Hinterschnitte (9) ausbilden.

6. Ladeschiene nach dem vorhergehenden Anspruch,
**dadurch gekennzeichnet, dass**
die Ladeschiene (1) bezüglich einer Längsmittelebene (23) spiegelsymmetrisch ausgebildet ist.

7. Ladeschiene nach einem der vorhergehenden Ansprüche,
**dadurch gekennzeichnet, dass**
die Ladeschiene (1) eine flache Unterseite (6) aufweist.

8. Gleitstein (11) für eine Ladeschiene (1), umfassend ein Mittelteil (12) und mindestens ein Seitenteil (14), wobei das Mittelteil (12) zum Zusammenwirken mit einem durch einen Längsschlitz (3) einer Ladeschiene (1) einsetzbaren Verbindungsmittel ausgebildet ist,
**dadurch gekennzeichnet, dass**
das mindestens eine Seitenteil (14) an einer Oberseite des Gleitsteins (11) von einer Unterseite des Gleitsteins (11) gesehen einen zum Mittelteil (12) gerichteten Hinterschnitt (15) ausbildet.

9. Gleitstein nach Anspruch 8,
**dadurch gekennzeichnet, dass**
das Mittelteil (12) über eine Schräge (30) in das Seitenteil (14) übergeht.

10. Gleitstein nach Anspruch 8 oder 9,
**dadurch gekennzeichnet, dass**
der Gleitstein (11) bezüglich einer Längsmittelebene (23) symmetrisch ausgebildet ist und zwei Seitenteile (14) aufweist, die jeweils an einer Oberseite des Gleitsteins (11) von einer Unterseite des Gleitsteins (11) gesehen einen zum Mittelteil (12) gerichteten Hinterschnitt (15) ausbilden.

11. Gleitstein nach einem der Ansprüche 8 bis 10,
**dadurch gekennzeichnet, dass**
der Gleitstein (11) als Schiebemutter mit einem Gewinde (13) zur Aufnahme einer durch den Längsschlitz (3) einsetzbaren Schraube (17) eines Befestigungsmittels ausgebildet ist.

12. Gleitstein nach einem der Ansprüche 8 bis 11,
**dadurch gekennzeichnet, dass**
der Gleitstein (11) zur kraftschlüssigen Fixierung an der Ladeschiene (1) ausgebildet ist.

13. Ladeschiene (1) und Gleitstein (11) für die Ladeschiene (1), wobei der Gleitstein (11) nach einem der Ansprüche 8 bis 12 ausgebildet ist und wobei die Ladeschiene (1) ein über zumindest einen Teil ihrer Länge gleichförmiges Querschnittsprofil hat und an einer Oberseite (4) eine Längsnut zur Aufnahme des Gleitsteins (11) aufweist, wobei die Längsnut in einem oberen Bereich durch mindestens einen an einer Seitenwand (5) der Längsnut ansetzenden Steg (7) zu einem Längsschlitz (3) verengt ist und der Steg (7) mindestens einen nach unten ragenden Vorsprung (8) trägt, der auf einer vom Längsschlitz (3) abgewandten Seite von unten gesehen einen Hinterschnitt (9) ausbildet.

## Claims

1. Loading rail (1) comprising a cross sectional profile which is uniform over at least part of the length of said loading rail and which has, on an upper side (4), a longitudinal groove for receiving at least one sliding block (11), the longitudinal groove being constricted in an upper region by at least one web (7), which is attached to a side wall (5) of the longitudinal groove, to form a longitudinal slot (3), and the web (7) bearing at least one downwardly projecting projection (8), the projection (8) forming an undercut (9) on a side facing away from the longitudinal slot (3), as seen from below, **characterized in that** the at least one projection (8) has a slope (30) on the side thereof facing the longitudinal slot (3), which slope is formed at least approximately parallel to a surface of the projection (8) in the region of the undercut (9).

2. Loading rail according to Claim 1, **characterized in that** the at least one projection (8) is adjacent to the longitudinal slot (3).

3. Loading rail according to Claim 1 or 2, **characterized in that** the at least one projection (8) is directed toward a guide surface of the loading rail (1).

4. Loading rail according to Claim 3, **characterized in that** the guide surface is designed as a guide slope (10) on the inside of a side wall of the loading rail (1).

5. Loading rail according to one of the preceding claims, **characterized in that** the longitudinal groove is constricted by two mutually opposite webs (7) which each bear a projection (8), the two projections forming undercuts (9).

6. Loading rail according to the preceding claim, **characterized in that** the loading rail (1) is of mirror-symmetrical design with respect to a longitudinal center plane (23).

7. Loading rail according to one of the preceding claims, **characterized in that** the loading rail (1) has a flat lower side (6).

8. Sliding block (11) for a loading rail (1), comprising a central part (12) and at least one side part (14), the central part (12) being designed for interaction with a connecting means which is insertable through a longitudinal slot (3) in a loading rail (1), **characterized in that**, on an upper side of the sliding block (11), as seen from a lower side of the sliding block (11), the at least one side part (14) forms an undercut (15) directed toward the central part (12).

9. Sliding block according to Claim 8, **characterized in that** the central part (12) merges via a slope (30) into the side part (14).

10. Sliding block according to Claim 8 or 9, **characterized in that** the sliding block (11) is of symmetrical design with respect to a longitudinal center plane (23) and has two side parts (14) which in each case, on an upper side of the sliding block (11), as seen from a lower side of the sliding block (11), form an undercut (15) directed toward the central part (12).

11. Sliding block according to one of Claims 8 to 10, **characterized in that** the sliding block (11) is designed as a sliding nut with a thread (13) for receiving a screw (17), which is insertable through the longitudinal slot (3), of a fastening means.

12. Sliding block according to one of Claims 8 to 11, **characterized in that** the sliding block (11) is designed for nonpositive fixing on the loading rail (1).

13. Loading rail (1) and sliding block (11) for the loading rail (1), the sliding block (11) being designed according to one of Claims 8 to 12 and the loading rail (1) having a cross sectional profile which is uniform over at least part of the length of said loading rail and having, on an upper side (4), a longitudinal groove for receiving at least one sliding block (11), the longitudinal groove being constricted in an upper region by at least one web (7), which is attached to a side wall (5) of the longitudinal groove, to form a longitudinal slot (3), and the web (7) bearing at least one downwardly projecting projection (8) which forms an undercut (9) on a side facing away from the longitudinal slot (3), as seen from below.

## Revendications

1. Rail de chargement (1) avec un profil de section transversale de forme identique sur au moins une partie de sa longueur, qui sur une face supérieure (4) comporte une rainure longitudinale destinée à recevoir au moins un coulisseau (11), dans une zone supérieure, la rainure longitudinale étant rétrécie en une encoche longitudinale (3) par au moins un listel (7) se raccordant sur une paroi latérale (5) de la rainure longitudinale et le listel (7) portant au moins une saillie (8) débordant vers le bas, sur une face opposée à l'encoche longitudinale (3) vue par le dessous, la saillie (8) formant une contre-dépouille (9),
**caractérisé en ce que**
sur sa face dirigée vers l'encoche longitudinale (3), l'au moins une saillie (8) comporte une inclinaison (30) qui est conçue approximativement à la parallèle d'une surface de la saillie (8) dans la région de la contre-dépouille (9).

2. Rail de chargement selon la revendication 1,
**caractérisé en ce que**
l'au moins une saillie (8) est voisine de l'encoche longitudinale (3).

3. Rail de chargement selon la revendication 1 ou la revendication 2,
**caractérisé en ce que**
l'au moins une saillie (8) est dirigée contre une surface de guidage du rail de chargement (1).

4. Rail de chargement selon la revendication 3,
**caractérisé en ce que**
la surface de guidage est conçue en tant qu'inclinaison de guidage (10) sur la face intérieure d'une paroi latérale du rail de chargement (1).

5. Rail de chargement selon l'une quelconque des revendications précédentes,
**caractérisé en ce que**
la rainure longitudinale est rétrécie par deux listels (7) mutuellement opposés, qui portent chacun une saillie (8), les deux saillies formant des contre-dépouilles (9).

6. Rail de chargement selon la revendication précédente,
**caractérisé en ce que**
le rail de chargement (1) est conçu en symétrie spéculaire par rapport au plan médian longitudinal (23).

7. Rail de chargement selon l'une quelconque des revendications précédentes,
**caractérisé en ce que**
le rail de chargement (1) comporte une face inférieure (6) plate.

8. Coulisseau (11) pour un rail de chargement (1) comprenant une partie centrale (12) et au moins une partie latérale (14), la partie centrale (12) étant conçue pour une action conjointe avec un moyen de liaison insérable à travers une encoche longitudinale (3) d'un rail de chargement (1),
**caractérisé en ce que**
sur une face supérieure du coulisseau (11), vue à partir d'une face inférieure du coulisseau (11), l'au moins une partie latérale (14) forme une contre-dépouille (15) dirigée vers la partie centrale (12).

9. Coulisseau selon la revendication 8,
**caractérisé en ce que**
par une inclinaison (30), la partie centrale (12) passe dans la partie latérale (14).

10. Coulisseau selon la revendication 8 ou la revendication 9,
**caractérisé en ce que**
le coulisseau (11) est conçu en symétrie d'un plan médian longitudinal (23) et comporte deux parties latérales (14) qui vues à partir d'une face inférieure du coulisseau (11), sur une face supérieure du coulisseau (11) forment chacune une contre-dépouille (15) dirigée vers la partie centrale (12).

11. Coulisseau selon l'une quelconque des revendications 8 à 10,
**caractérisé en ce que**
le coulisseau (11) est conçu en tant qu'écrou coulissant avec un taraudage (13) destiné à recevoir une vis (17) d'un moyen de fixation, insérable à travers l'encoche longitudinale (3).

12. Coulisseau selon l'une quelconque des revendications 8 à 11,
**caractérisé en ce que**
le coulisseau (11) est conçu pour la fixation par complémentarité de force sur le rail de chargement (1).

13. Rail de chargement (1) et coulisseau (11) pour le rail de chargement (1), le coulisseau (11) étant conçu selon l'une quelconque des revendications 8 à 12 et le rail de chargement (1) ayant un profil de section transversale de forme identique sur au moins une partie de sa longueur et comportant sur une face supérieure (4) une rainure longitudinale destinée à recevoir le coulisseau (11), dans une région supérieure, la rainure longitudinale étant rétrécie en une encoche longitudinale (3) par au moins un listel (7) se raccordant sur une paroi latérale (5) de la rainure longitudinale et le listel (7) portant au moins une saillie (8) débordant vers le bas, qui vue par le dessous, sur une face opposée à l'encoche longitudinale (3) forme une contre-dépouille (9).
